# EUROPÄISCHE PATENTSCHRIFT

(11) **EP 1 985 494 B1**
(45) Veröffentlichungstag und Bekanntmachung des Hinweises auf die Patenterteilung: **22.12.2010**
(21) Anmeldenummer: 08006398.5
(22) Anmeldetag: 31.03.2008
(51) Int. Cl.: B60P 1/28, B62D 21/14, B62D 33/08

(54) **Fahrzeughilfsrahmen**
Vehicle subframe
Faux-châssis de véhicule

(30) Priorität: 23.04.2007 DE 202007005807 U
(43) Veröffentlichungstag der Anmeldung: 29.10.2008
(73) Patentinhaber: FAUN Umwelttechnik GmbH & Co. KG, 27711 Osterholz-Scharmbeck (DE)
(72) Erfinder: Stephan, Frank, 59821 Arnsberg (DE); Kück, Matthias, 28790 Schwanewede (DE)
(74) Vertreter: Laufhütte, Dieter

(56) Entgegenhaltungen:
- DE-U1- 29 907 602
- FR-A- 2 842 771
- FR-A- 2 853 296
- US-A1- 2006 021 541

## Beschreibung

Die Erfindung betrifft einen Hilfsrahmen zum Aufbau auf den Rahmen eines Lastkraftwagens (LKW), nach dem Oberbegriff des Anspruchs 1.

Bei Sonderfahrzeugen werden Aufbauten verschiedenster Art auf das Fahrgestell eines Lastkraftwagens aufgebaut. Dabei müssen die Aufbauten mit dem Rahmen des LKW-Fahrgestells verbunden werden. Hierzu ist es bereits bekannt, auf dem fahrzeugseitigen Rahmen entsprechende Hilfsrahmen zu montieren, auf die dann der Aufbau des Sonderfahrzeugs mit den entsprechenden Ausrüstungsteilen gesetzt wird. Bei einem derartigen Aufbau kann es sich vorteilhaft beispielsweise um den Aufbau eines Müllwagens handeln. Grundsätzlich sind aber auch andere Aufbauten von Sonderfahrzeugen entsprechend auf einem Hilfsrahmen aufbaubar.

Üblicherweise werden derartige Hilfsrahmen über Verbindungsplatten an den Rahmen des Fahrgestells des Lastkraftwagens geschraubt. Werden von einem Sonderfahrzeughersteller, der die Aufbauten je nach Bedarf herstellt, jedoch unterschiedliche LKW-Typen ausgerüstet, müssen derzeit die Hilfsrahmen jeweils an das LWKspezifische Fahrgestell angepaßt werden. Hierzu müssen je nach auszurüstendem LKW-Typ unterschiedliche Hilfsrahmen nach Bedarf zur Verfügung gestellt werden. Dies bedingt eine teure und aufwendige Lagerhaltung unterschiedlicher Hilfsrahmentypen.

Dokument DE 299 07 602 U offenbart den Oberbegriff des Anspruchs 1.

Aufgabe der vorliegenden Erfindung ist es, den gattungsgemäßen Hilfsrahmen derart weiterzuentwickeln, dass dieser für unterschiedliche Fahrgestelle verwendbar ist.

Erfindungsgemäß wird diese Aufgabe durch einen Hilfsrahmen gemäß der Merkmalskombination des Anspruchs 1 gelöst. Demnach ist ein Hilfsrahmen zum Aufbau auf den Rahmen eines Lastkraftwagens vorgesehen, der durch anschraubbare Verbindungsplatten mit dem Rahmen verbunden ist, wobei er Profile enthält, die mehrere Lochbilder aufweisen, die jeweils an existierende Lochbilder von mindestens zwei Rahmen unterschiedlicher LKW angepaßt sind.

Durch Vorsehen der unterschiedlichen Lochbilder kann der jeweilige Hilfsrahmen mit standardmäßigen Verbindungsplatten an Rahmen unterschiedlicher Fahrgestelle montiert werden. Insofern brauchen keine unterschiedlichen Profile und Hilfsrahmen für die verschiedenen Fahrzeuggestelle mehr vorgehalten werden.

Bevorzugte Ausgestaltungen der Erfindung ergeben sich aus den sich an den Hauptanspruch anschließenden Unteransprüchen.

Vorteilhaft ist der Hilfsrahmen aus fertig geschweißten, feuerverzinkten Bauteilen hergestellt.

Die Längsträger, die die jeweiligen Lochbilder enthalten, bestehen vorteilhaft aus C-Profilen.

Der Hilfsrahmen ist aus zwei Teilen hergestellt, wobei ein erster Teil im Bereich der Vorderachse auf den Rahmen des LKW aufsetzbar ist, und ein zweiter Teil im Bereich der mindestens einen Hinterachse auf den Rahmen des LKW aufsetzbar ist.

Der hintere Hilfsrahmen besteht aus zwei identisch aufgebauten Bauteilen.

Die jeweiligen Bauteile bestehen hier jeweils aus einem C-Profil, das jeweils mindestens ein senkrecht zu ihnen stehendes Rohr aufweist, an dessen freien Ende eine das Rohr hälftig umschließende Platte derart angeordnet ist, dass beide sich im montierten Zustand gegenüberliegenden C-Profile über die sich dann überdekkenden Platten miteinander verschraubbar sind.

Dabei können in den Platten teilweise Langlöcher derart vorgesehen sein, dass die aufeinanderliegenden Platten vor dem Festziehen der Schrauben gegeneinander längsverschieblich sind, um so die Breite des Hilfsrahmens festzulegen.

Vorteilhaft können über weitere Verbindungsbleche auf dem Hilfsrahmen aufliegende Längsprofile an den Hilfsrahmen anschraubbar sein. Über diese Längsprofile werden dann die weiteren Aufbauten auf dem Hilfsrahmen befestigt.

Weiterhin betrifft die Erfindung einen Müllwagen mit einer Müllbehälter-Entleervorrichtung und mit einem Hilfsrahmen entsprechend der vorgenannten Merkmale.

Mit dem erfindungsgemäßen Hilfsrahmen können unterschiedliche Längen, Breiten und Winkel der verschiedenen Fahrgestelltypen in einfacher Weise ausgeglichen werden. Damit können standardisierte Aufbauten auf den jeweils angepaßten Hilfsrahmen aufgesetzt werden. Diese Bauweise ermöglicht eine Verbesserung des Produktionsablaufs bei der Fertigung von Fahrzeugen mit Sonderaufbauten, insbesondere bei der Produktion von Müllwagen. So können hier zwei parallele Fertigungen realisiert werden, wobei in dem ersten Fertigungsstrang das Fahrgestell nach Eingangsprüfung mit dem Kabelbaum, dem Hilfsrahmen und daran angebrachten Ausrüstungsteilen versehen wird. Parallel wird in einem eigenen Prozess unabhängig hiervon der komplette Heckladeraufbau zusammengebaut und lackiert und in seiner Funktion geprüft. Nach getrennter Fertigstellung dieser beiden Baugruppen werden diese am Ende des Produktionsprozesses miteinander verbunden.

Weitere Merkmale, Einzelheiten und Vorteile der Erfindung werden anhand eines in der Zeichnung dargestellten Ausführungsbeispiels näher erläutert. Es zeigen:
- Figuren 1a - 1c:: einen LWK mit Fahrgestell und aufgebautem Hilfsrahmen in verschiedenen Ansichten,
- Figur 2:: eine perspektivische Ansicht gemäß Figur 1 und
- Figuren 3a - 3c:: eine Ansicht entsprechend Figur 1, in welcher bereits weitere Teile auf dem Hilfsrahmen aufgebaut sind.

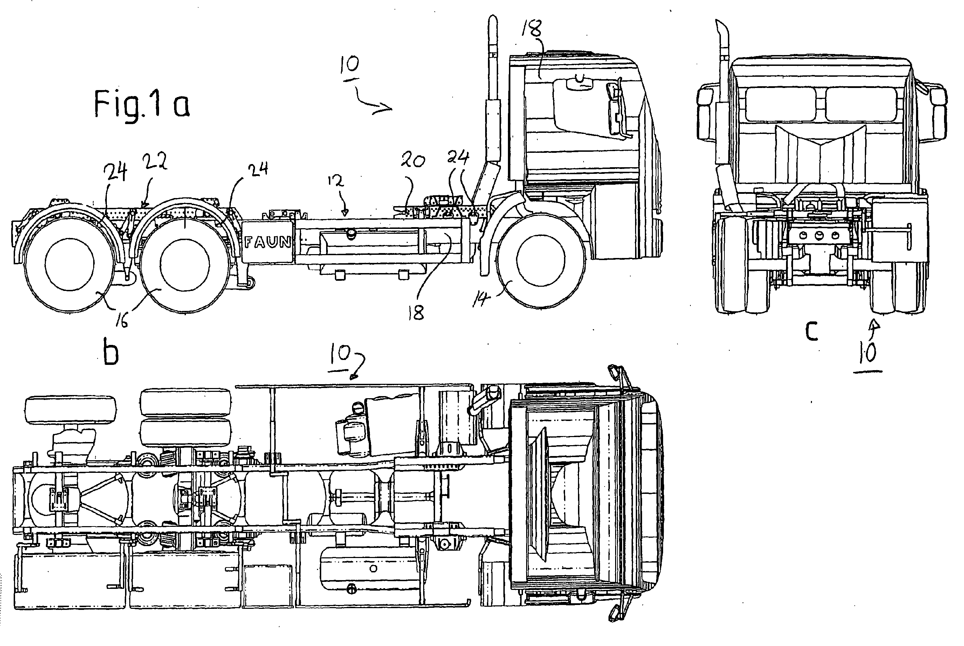

In den drei Ansichten der Figur 1 ist ein Lastkraftwagen (LKW) 10 üblicher Bauart gezeigt, der ein Fahrgestell 12 mit einer die Vorderräder 14 tragenden Vorderachse und zwei die hinteren Räder 16 tragenden Hinterachsen umfasst. Im vorderen Bereich des Fahrgestells ist der hier in der Figur 1 nicht gezeigte Motor und das Fahrerhaus 18 angeordnet. Der Rahmen des Fahrgestells 12 ist mit 18 bezeichnet.

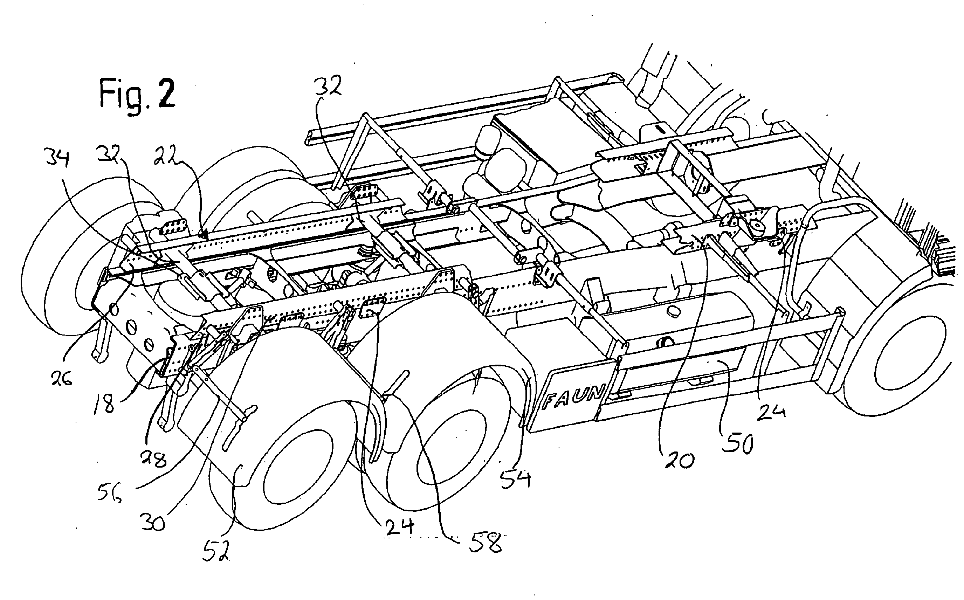

In Figur 1a ist eine Seiteansicht des Lastkraftwagens 10 gezeigt, in Figur 1b eine Draufsicht und in Figur 1c eine Ansicht von hinten. Um an dem Rahmen 18 des Lastkraftwagens, der im wesentlichen aus Längsträgern und einigen Querverstrebungen besteht, einen hier nicht näher dargestellten Sonderaufbau aufbauen zu können, ist auf dem Rahmen 18 ein Hilfsrahmen aufgebaut, der in dem hier dargestellten Ausführungsbeispiel aus dem vorderen Hilfsrahmen 20 und dem hinteren Hilfsrahmen 22 besteht. Der vordere Hilfsrahmenteil 20 und der hintere Hilfsrahmenteil 22 sind hierbei über Verbindungsplatten 24 mit dem Rahmen 18 verschraubt. Der Rahmen 18 weist hierzu vorgefertigte Schraublöcher auf. Diese Schraublöcher sind in einem Lochbildraster angeordnet und dienen dazu, Aufbauten und Anbauteile, wie den vorgenannten Hilfsrahmen 20 bzw. 22 oder aber auch Tanks, den Auspuff und Batterien ohne zusätzliche Bohrungen anzubringen. In den Längsträgern der Hilfsrahmenteile 20 bzw. 22 sind entsprechende Lochbilder angeordnet, die ein Verschrauben mit den Befestigungsplatten 24 ermöglichen. Die als C-Profile ausgebildeten Längsträger der Hilfsrahmenteile 20 und 24 weisen dabei, wie in der Figur 1a angedeutet, mehrere übereinander liegende Lochmuster auf, die unterschiedlichen Lochmustern von Rahmenkonstruktionen unterschiedlicher Hersteller angepaßt sind. Somit können die entsprechenden Hilfsrahmenteile 20 bzw. 22 vom Aufbau her einfach für unterschiedliche LKW-Typen eingesetzt werden. Insbesondere aus der Figur 2 ist der jeweilige Aufbau des Rahmens 18 und der Hilfsrahmenteile 20 bzw. 22 zu erkennen. Die Hilfsrahmenteile 20 und 22 bestehen aus fertig geschweißten feuerverzinkten Bauteilen. Der vordere Hilfsrahmenteil 20 ist im Bereich der Vorderachse auf den Rahmen 18 aufgesetzt und mit diesem über die Haltebleche 24 verschraubt. Der hintere Hilfsrahmenteil 22 ist im Bereich der beiden Hinterachsen auf dem Rahmen 18 des LKW aufgesetzt und dort über die Haltebleche 24 mit diesem fest verschraubt.

Der hintere Hilfsrahmen 22 ist aus zwei identischen Teilen 26 und 28 gefertigt. Dabei bestehen diese identischen Teile 26 und 28 jeweils aus einer C-Schiene mit den entsprechenden Lochbildern 30. Im vorliegenden Fall sind senkrecht jeweils zwei Rohrabschnitte 32 vorgesehen, die an ihrem freien Ende eine das jeweilige Rohr 32 hälftig umschließende Platte 34 derart aufweisen, dass beide sich im montierten Zustand gegenüberliegenden C-Profile über die sich entsprechend überdeckenden Platten 34 miteinander verschraubbar sind, wie dies in der Figur 2 angedeutet ist. Hierzu sind, hier in der Figur 2 nicht näher dargestellte, Schraublöcher, die teilweise als Langlöcher ausgebildet sind, vorgesehen, um eine Verschiebung der Platten 34 gegeneinander zuzulassen, so dass sich eine Breitenanpassung des Hilfsrahmens 22 an den Rahmen 28 ergibt. Die Bleche 34 stehen jeweils über die freien Enden der Rohre 32 hinaus, so dass sie jeweils die gegenüberliegenden Rohre im montierten Zustand mit umfassen. Hierdurch ergibt sich eine stabile Verbindung der beiden Hilfsrahmenteile 26 und 28.

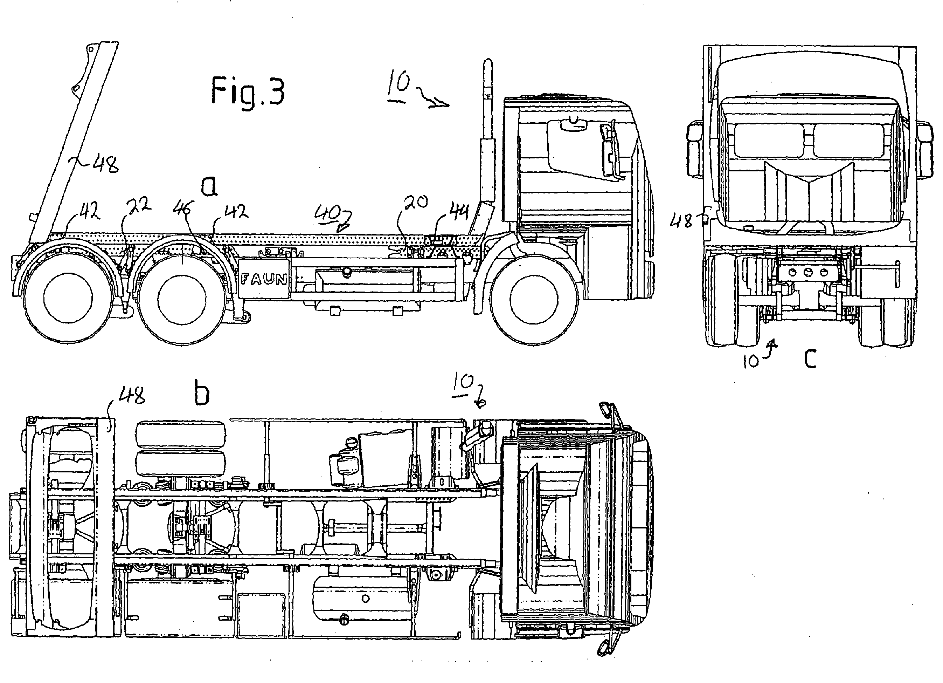

In der Figur 3 sind jeweils mit dem Figurenteil a ebenfalls eine Seitenansicht eines LKWs 10, mit der Figur b eine Draufsicht auf den LKW und mit dem Teil c der Figur eine Ansicht von hinten gezeigt. In der Figur 3 ist ein Montagezustand gezeigt, in welchem auf die Hilfsrahmenteile 20 und 22 ein weiterer Aufbau 40 augesetzt ist, der ebenfalls über Verbindungsplatten 42 bzw. Verbindungsprofile 44 mit den Hilfsrahmenteilen 22 bzw. 20 verbunden ist. Die Verbindungsplatten 42 sitzen, wie hier dargestellt, auf am Hilfsrahmenteil 22 seitlich abstehenden Zapfen 46 auf, wodurch die Stabilität vergrößert ist. Der Aufbau 40 umfasst hier den Heckrahmenteil 48 eines Müllwagenaufbaus.

Wie anhand der Figur 2 dargestellt ist, wird ein Teil der seitlichen Aufbauten, wie beispielsweise der Tank 50 unmittelbar am Rahmen 18 angebaut. Teilweise werden die Anbauten aber auch bereits am Hilfsrahmen angesetzt, wie anhand der hinteren Radschutzbleche 52 und 54 gezeigt, die über entsprechende Halterungen 56 bzw. 58 mit dem Hilfsrahmenteil 22 verbunden sind.

## Patentansprüche

1. Hilfsrahmen (20,22) zum Aufbau auf den Rahmen (18) eines Lastkraftwagens (10) (LKW), der durch anschraubbare Verbindungsplatten (24) mit dem Rahmen (18) verbunden ist, wobei er Profile enthält, die mehrere Lochbilder aufweisen, die jeweils an existierende Lochbilder von mindestens zwei Rahmen unterschiedlicher LKW angepaßt sind, und
dass der Hilfsrahmen (20,22) aus einem Teil besteht, das im Bereich der Vorderachse auf den Rahmen (18) des LKW aufsetzbar ist und aus einem Teil, das im Bereich der mindestens einen Hinterachse auf den Rahmen des LKW aufsetzbar ist, dass der hintere Hilfsrahmen (22) aus zwei identisch aufgebauten Bauteilen (26,28) besteht, **dadurch gekennzeichnet, dass** die jeweiligen Bauteile (26,28) jeweils aus einem C-Profil bestehen, das jeweils mindestens ein senkrecht zu ihm stehendes Rohr 32 aufweist, an dessen freien Ende eine das Rohr hälftig umschließende Platte (34) derart angeordnet ist, dass beide sich im montierten Zustand gegenüberliegenden C-Profile über die sich dann überdeckenden Platten (34) miteinander verschraubbar sind.

2. Hilfsrahmen nach Anspruch 1, **dadurch gekennzeichnet, dass** er aus fertig geschweißten, feuerverzinkten Bauteilen besteht.

3. Hilfsrahmen nach einem der Ansprüche 1 bis 2, **dadurch gekennzeichnet, dass** in den Platten (34) teilweise Langlöcher derart vorgesehen sind, dass die aufeinanderliegenden Platten (34) vor dem Festziehen der Schrauben gegeneinander längsverschieblich sind, um so die Breite des Hilfsrahmens festzulegen.

4. Hilfsrahmen nach einem der vorangehenden Ansprüche einem der vorangehenden Ansprüche, **dadurch gekennzeichnet, dass** über Verbindungsbleche auf dem Hilfsrahmen aufliegende Längsprofile an den Hilfsrahmen (20,22) anschraubbar sind.

5. Müllwagen mit einer Müllbehälter-Entleervorrichtung und mit einem Hilfsrahmen nach einem der vorangegangenen Ansprüche.

## Claims

1. An auxiliary frame (20, 22) for erection onto the frame (18) of a heavy-goods vehicle (10) (HGV), the auxiliary frame being connected by connection plates (24) which can be screwed on to the frame (18), and wherein the auxiliary frame (20, 22) includes sections which have a plurality of hole patterns which are each adapted to existing hole patterns of at least two frames of different HGV's; and wherein the auxiliary frame (20, 22) comprises a part which can be set onto the frame (18) of the HGV in the region of the front axle and a part which can be set onto the frame of the HGV in the region of the at least one rear axle; wherein the rear auxiliary frame (22) comprises two identically designed components (26, 28),
**characterised in that**
the respective components (26, 28) each comprise a C-section which in each case has at least one tube (32) which stands perpendicular to it and to whose free end a plate (34) surrounding the tube in a half manner is arranged such that both C-sections which are disposed oppositely in the assembled state can be screwed to one another via the then overlaying plates (34).

2. An auxiliary frame in accordance with claim 1, **characterised in that** it comprises finish welded, hot-galvanised components.

3. An auxiliary frame in accordance with one of the claims 1 to 2, **characterised in that** elongate holes are partly provided in the plates (34) such that the plates (34) lying on one another are mutually longitudinally displaceable before the tightening of the screws in order thus to fix the width of the auxiliary frame.

4. An auxiliary frame in accordance with one of the preceding claims, **characterised in that** longitudinal sections lying on the auxiliary frame via metal connection plates can be screwed to the auxiliary frame (20, 22).

5. A dustbin lorry having an apparatus for emptying rubbish containers and having an auxiliary frame in accordance with one of the preceding claims.

## Revendications

1. Faux-châssis (20, 22) destiné au montage sur le châssis (18) d'un véhicule poids lourd (camion) (10), qui est relié au châssis (18) par des plaques de jonction vissables (24), celui-ci comprenant des profils qui présentent plusieurs configurations de perçage, qui sont adaptées respectivement aux configurations de perçage existantes d'au moins deux châssis de camions différents, et le faux-châssis (20, 22) se constituant d'une pièce qui est posable dans la zone de l'essieu avant sur le châssis (18) du camion et d'une pièce qui est posable dans la zone d'au moins un essieu arrière sur le châssis du camion, le faux-châssis arrière (22) se constituant de deux composants (26, 28) à structure identique,
**caractérisé en ce que**
les composants respectifs (26, 28) se constituent respectivement d'un profil en C, qui présente respectivement au moins un tube (32) se trouvant perpendiculaire à lui, à l'extrémité libre duquel est disposée une plaque (34) entourant de moitié le tuyau de sorte que les deux profils en C placés face à face l'un de l'autre à l'état monté sont vissables l'un avec l'autre au-dessus des plaques (34) se superposant alors.

2. Faux-châssis selon la revendication 1, **caractérisé en ce qu'**il se constitue de composants galvanisés à chaud et complètement soudés.

3. Faux-châssis selon une quelconque des revendications 1 à 2, **caractérisé en ce que** dans les plaques (34), des trous oblongs sont prévus en partie de sorte que les plaques (34) superposées l'une sur l'autre sont coulissantes dans un sens longitudinal l'une par rapport à l'autre avant le serrage à fond, afin de déterminer ainsi la largeur du faux-châssis.

4. Faux-châssis selon une quelconque des revendications précédentes, **caractérisé en ce que** des profils longitudinaux en applique sur le faux-châssis par l'intermédiaire de tôles de jonction sont vissables au faux-châssis (20, 22).

5. Camion de collecte des ordures avec un dispositif de vidage du conteneur à ordures et avec un faux-châssis selon une quelconque des revendications précédentes.
